# EUROPÄISCHE PATENTSCHRIFT

(11) **EP 1 118 424 B1**
(45) Veröffentlichungstag und Bekanntmachung des Hinweises auf die Patenterteilung: **09.04.2003**
(21) Anmeldenummer: 00123084.6
(22) Anmeldetag: 01.11.2000
(51) Int. Cl.: B23Q 3/08

(54) **Spanneinrichtung**
Clamping device
Dispositif de serrage

(30) Priorität: 20.01.2000 DE 10002395
(43) Veröffentlichungstag der Anmeldung: 25.07.2001
(73) Patentinhaber: Vischer & Bolli AG, 8600 Dübendorf 1 (CH)
(72) Erfinder: Etter, Ernst, 8800 Thalwil (CH)
(74) Vertreter: Paul, Dieter-Alfred, Dipl.-Ing.

(56) Entgegenhaltungen:
- EP-A1- 0 827 806
- DE-U1- 29 615 613
- DE-U1- 29 804 730
- DE-U1- 29 811 699

## Beschreibung

Die vorliegende Erfindung betrifft eine Spanneinrichtung zur Fixierung eines Einzugsbolzens an einem Maschinentisch, einer Grundplatte oder dergleichen, mit einem Kolben, der axial verstellbar in einer Ausnehmung des Maschinentisches angeordnet und hydraulisch betätigbar ist, und einem Deckel, um die Ausnehmung im Maschinentisch zu verschließen, wobei der Kolben und/oder der Deckel eine Aufnahme bilden, in die ein Einzugsbolzen durch den Dekkel eingesetzt werden kann und in der er mittels eines durch Verstellung des Kolbens betätigbaren Spannmechanismus fixierbar ist.

Die Bearbeitung von Werkstücken ist häufig sehr komplex und kann eine Vielzahl von zerspanenden und spanlosen Arbeitsgängen an unterschiedlichen Bearbeitungsmaschinen umfassen, um aus einem Rohling das fertige Bauteil herzustellen. Bei allen Fertigungsabläufen ist dabei wesentlich, daß das Werkstück bei jedem Arbeitsgang eine definierte Lage an der jeweiligen Werkzeugmaschine einnimmt.

Zu diesem Zweck ist es in der Praxis üblich, das zu bearbeitende Werkstück zunächst auf eine Trägerpalette aufzuspannen und dann die ganze Einheit über mehrere Einzugsbolzen, die an der Rückseite der Trägerpalette vorgesehen und als Zentrierelemente ausgebildet sind, an der jeweiligen Werkzeugmaschine festzuspannen, indem die Einzugsbolzen in entsprechende Schnellspanneinheiten, die am Maschinentisch vorgesehen sind, eingesetzt werden. In der Produktion kann auf diese Weise die Lage der Schnellspanneinrichtungen als fester Maschinenparameter berücksichtigt werden, so daß es lediglich erforderlich ist, jeweils das Werkstück exakt an der Trägerpalette zu positionieren. Das eigentliche Fest- und Umspannen der Einheit aus Werkstück und Trägerpalette an den Maschinen kann dann sehr schnell und unproblematisch erfolgen, ohne daß eine weitere Positionierung notwendig ist.

Die bekannten mechanisch/hydraulischen Spanneinrichtungen, von denen die vorliegende Erfindung ausgeht, sind entweder als sogenannte Aufbauzylinder, die geschlossene Einheiten bilden und auf einem Maschinentisch, eine Grundplatte oder dergleichen aufgespannt werden können (siehe DE 298 04 730 U1 bzw. DE 298 11 699 U1), oder als sogenannte Einbauspannverschlüsse, die in den Maschinentischen, Schnellverschlußplatten, Würfeln etc. versenkt werden können, ausgebildet. Die bekannten Einbauspannverschlüsse werden dabei in eine Ausnehmung des Maschinentischs oder einen entsprechenden Grundkörper direkt eingesetzt, wobei dann zwischen dem Kolben des Verschlusses und der Ausnehmung des Maschinentischs ein Druckraum gebildet wird, der zum Lösen der Spanneinrichtung mit einem Hydraulikmittel beaufschlagbar ist.

Die Verwendung solcher Einbauspannverschlüsse gestaltet sich oftmals problematisch, da die Maschinentische häufig nicht die nötige Gußqualität besitzen, so daß die Aufnahmen nicht mit der notwendigen Genauigkeit herstellbar sind und somit Abdichtungsprobleme auftreten. Außerdem kann durch die Lunkerbildungen die Lebensdauer der Kolben der Spanneinrichtungen beziehungsweise die Lebensdauer der Abdichtungen zum Teil stark leiden. Hinzu kommt, daß die Spannkräfte in den Maschinentisch, Grundkörper oder dergleichen, eingeleitet werden, so daß es dort zu Verspannungen kommen kann.

Schließlich müssen die Ausnehmungen in dem Maschinentisch hochgenau gearbeitet werden, um eine entsprechend genaue Positionierung des Spannverschlusses zu erreichen.

Aufgabe der vorliegenden Erfindung ist es daher, eine für den Einbau in einen Maschinentisch oder dergleichen geeignete Spanneinrichtung der eingangs genannten Art anzugeben, die so ausgebildet ist, daß sie auf einfache Weise im Maschinentisch montiert werden kann, ohne daß Abdichtungsprobleme auftreten, und wartungsfreundlich ist.

Diese Aufgabe ist bei einer Spanneinrichtung der eingangs genannten Art dadurch gelöst, daß in die Maschinentischausnehmung eine einteilig ausgebildete Buchse eingesetzt ist, in welcher der Kolben unter Bildung eines Druckraums verschiebbar gehalten ist, wobei der Deckel einerseits an der Buchse und andererseits am Maschinentisch befestigt ist und die Befestigung am Maschinentisch durch mehrere die Buchse axial durchsetzende Schrauben erfolgt, und wobei die Buchse und/oder der Deckel Zentrierflächen zur Positionierung am Maschinentisch oder dergleichen aufweisen.

Dadurch, daß die erfindungsgemäße Spanneinrichtung als geschlossene Einheit ausgebildet ist, können die im Stand der Technik auftretenden Abdichtungsprobleme eliminiert werden. Weiterhin kann die Spanneinrichtung als standardisiertes Kompaktbauteil ausgebildet sein, wodurch die Herstellungskosten herabgesetzt werden können. Wenn die Positionierung der Spanneinrichtung über den Deckel erfolgt, ist es lediglich erforderlich, entsprechende Zentrierungen am Maschinentisch und am Deckel vorzusehen mit der Folge, daß Bearbeitungsungenauigkeiten im restlichen Bereich der Aufnahme nur beschränkt eine Rolle spielen. Ein möglicherweise zwischen der Aufnahme und der Buchse vorhandener Ringspalt wird von unten her mittels zwei O-Ringen gegen Öl bzw. Luft abgedichtet.

Die erfindungsgemäße Spanneinrichtung bietet den weiteren Vorteil, daß im Betrieb keine Verspannungen am Maschinentisch auftreten, da die Spann- bzw. Lösekräfte vollständig innerhalb der Spanneinrichtung aufgenommen werden. Im übrigen ist die Lebensdauer der Spanneinrichtungen deutlich erhöht, da beispielsweise Lunkerbildungen im Maschinentisch für die Funktion der Spanneinrichtung keine Rolle spielen.

Die Zentrierung des Deckels am Maschinentisch sowie der Buchse kann auf unterschiedliche Arten erfolgen. Als vorteilhaft hat es sich erwiesen, am Deckel einen in die Buchse eingreifenden Zentrieransatz vorzusehen, wobei dann zwischen Deckel und Buchse zweckmäßigerweise ein Dichtungselement angeordnet ist. Zur Zentrierung des Dekkels am Maschinentisch kann der Außenrand des Deckels als Zentrierrand ausgebildet sein, der mit einer am Maschinentisch vorgesehenen Vertiefung eine Passung bildet. Dabei ist der Deckel zumindest teilweise, insbesondere aber vollständig in den Maschinentisch versenkbar, so daß er bündig mit der Tischoberfläche abschließt. Die Versorgung der Spanneinrichtung mit einem Hydraulikmittel und gegebenenfalls mit Luft erfolgt zweckmäßigerweise im Bodenbereich der Buchse, da hier die Abdichtung zwischen Buchse und Aufnahme am einfachsten erfolgen kann.

Hinsichtlich weiterer vorteilhafter Ausgestaltungen der Erfindung wird auf die Unteransprüche sowie die nachfolgende Erläuterung eines Ausführungsbeispiels unter Bezugnahme auf die beiliegende Zeichnung verwiesen. In der Zeichnung zeigt
- Figur 1: eine Ausführungsform einer erfindungsgemäßen Spanneinrichtung mit eingesetztem und festgespanntem Einzugsbolzen im Längsschnitt und
- Figur 2: die Spanneinrichtung aus Figur 1 mit gelöstem Spannmechanismus.

Zu der Spanneinrichtung 1, die an einem Maschinentisch, einer Grundplatte oder dergleichen montiert sein kann, gehört eine als Zylinder ausgebildete Buchse 3, die an ihrem oberen Ende offen und in eine Ausnehmung des Maschinentisches eingesetzt ist. In die Zylinderbohrung 4 der Buchse 3 ist unter Bildung eines Druckraumes 5 ein Kolben 6 axial bewegbar eingesetzt, wobei der Ringspalt zwischen Zylinderbohrung 4 und Kolben 6 durch einen O-Ring 7 abgedichtet ist. In den Boden der Zylinderbohrung 4 mündet ein in der Buchse 3 ausgebildeter Hydraulikmittelkanal 8, durch welchen dem Druckraum 5 über eine im Maschinentisch 2 vorgesehene Zuführleitung ein Hydraulikmittel wie beispielsweise Öl zugeführt werden kann. Zwischen dem Boden der Buchse 3 und dem Boden der Ausnehmung 2a ist ein Dichtungselement 25 vorgesehen, das Leckagen des Öls verhindert.

Die offene Oberseite der Buchse 3 ist durch einen Deckel 9 verschlossen, der an der Buchse 3 durch sechs Schrauben 26 festgeschraubt und zentriert gehalten ist, wozu der Deckel 9 buchsenseitig einen Zentrieransatz 9a aufweist, der paßgenau zum Innendurchmesser der Buchse 3 dimensioniert ist.

Die Befestigung der Spanneinrichtung 1 am Maschinentisch 2 erfolgt ebenfalls über den Deckel, der am Maschinentisch durch ebenfalls sechs Schrauben 27, die im Wechsel zu den Schrauben 26 angeordnet sind und die Buchse 3 axial durchgreifen, festgeschraubt ist. Dabei greift der Deckel 9 in die Ausnehmung des Maschinentischs so ein, daß er etwa bündig mit der Tischkante abschließt. In der Ausnehmung ist Deckel 9 zentriert gehalten, wozu der Außenrand des Deckels 9 als Zentrierrand ausgebildet ist, der mit einer entsprechenden Zentrierfläche der Ausnehmung eine Passung bildet. Außerdem weist die Mantelfläche der Buchse 3 in ihrem unteren Bereich eine Zentrierfläche 28 auf, die mit einer entsprechenden Zentrierfläche der Maschinentischausnehmung ebenfalls eine Passung bildet. Diese Zentrierfläche 28 im unteren Bereich der Buchse 3 kann ebenfalls zur Positionierung der Spanneinrichtung verwendet werden, wenn diese als Aufbauzylinder an der Maschinentischoberfläche fixiert werden soll.

Die Ausnehmung kann auch einen definiert vergrößerten Durchmesser haben, wodurch es möglich ist den Zylinder noch exakter durch Ausgießen im Stichmaßgenauigkeit zu bringen.

Zwischen dem Deckel 9 und dem Kolben 6 ist weiterhin ein nur schematisch angedeutetes Tellerfederpaket 10 angeordnet, das den Kolben 6 in Richtung des Bodens der Zylinderbohrung 4 nach unten beaufschlagt.

In der dem Druckraum 5 gegenüberliegenden Oberseite des Kolbens 6 ist eine Sackbohrung vorgesehen, die eine Aufnahme 11 für einen Einzugsbolzen 12 bildet, der in die Aufnahme 11 durch eine im Deckel 9 vorgesehene Durchgangsbohrung 13 eingesetzt ist. Zur Erleichterung und Führung dieses Einsetzvorganges ist in der Durchgangsbohrung 13 ein hülsenförmiges Führungselement 14 vorgesehen, und zur exakten Positionierung des Einzugsbolzens 12 in der Spanneinrichtung 1 ist im oberen Bereich der Durchgangsbohrung 13 in Passung zu einem Flansch 12a des Einzugsbolzens 12 dimensioniert.

Zur Fixierung des Einzugsbolzens 12 in der Aufnahme 11 ist ein Spannmechanismus vorgesehen. Dieser umfaßt in an sich bekannter Weise einen in die Aufnahme 11 eingesetzten Kugelkäfig 15, in dem mehrere Kugeln 16 radial verstellbar gehalten sind, die je nach Kolbenstellung in eine Nut 17 in der Wandung der Aufnahme 11 nach außen ausweichen können, so daß ein Einzugsbolzen 12 in den Kugelkäfig 15 eingesetzt und aus diesem herausgenommen werden kann, oder durch die Wandung der Aufnahme 11 an einem solchen Ausweichen gehindert und damit in Eingriff mit der entsprechenden Gegenfläche, am Einzugsbolzen 12 gehalten wird, wie dies in der Zeichnung dargestellt ist.

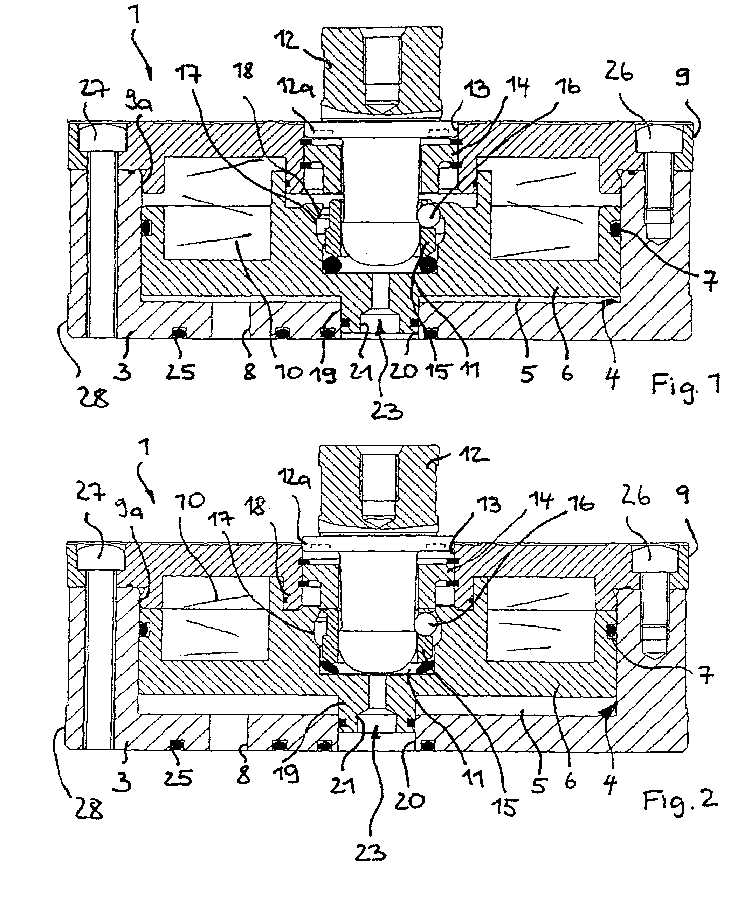

In der Zeichnung zeigt die Figur 1 die Spanneinrichtung 1 in ihrer Spannstellung, in der der Druckraum 5 drucklos ist und der Kolben 6 durch das Tellerfederpaket 10 nach unten gedrückt wird, so daß eine obere Schrägfläche 18 der Nut 17 die Kugeln 16 in Eingriff mit dem Einzugsbolzen 12 hält. Wenn jetzt der Druckraum 5 über den Hydraulikmittelkanal 8 mit Druckmittel beaufschlagt wird, wird der Kolben 6 entgegen der Rückstellkraft des Tellerfederpakets 10 nach oben in die in Figur 2 gezeigte Lage gedrückt, in der die Nut 17 den Kugeln 16 Raum läßt, radial nach außen auszuweichen, so daß der Einzugsbolzen 12 aus der Spanneinrichtung 1 herausgenommen beziehungsweise dann wieder in diese eingesetzt werden kann. Der Hub des Kolbens 6 ist dabei so gewählt, daß der Einzugsbolzen 12 durch den Boden der Aufnahme 11 nach oben gedrückt wird, um das Entfernen des Einzugsbolzens 12 zu erleichtern.

An seiner druckraumseitigen Stirnfläche weist der Kolben 6 einen Ansatz 19 auf, der in einer im Boden der Zylinderbohrung 4 ausgebildete Ausnehmung 20 verschiebbar geführt und gegenüber dieser abgedichtet ist. Die Ausnehmung 20 bildet zusammen mit einem in dem Ansatz 19 vorgesehenen, die Ausnehmung 20 mit dem Boden der Aufnahme 11 für den Einzugsbolzen 12 verbindenden, düsenartig ausgebildeten Kanalabschnitt 21 und mit einem sich im Maschinentisch 2 erstreckenden Kanalabschnitt einen Lufteinlaßkanal 23, der an eine nicht dargestellte Druckluftquelle angeschlossen ist. Durch diesen Lufteinlaßkanal 23 kann beim Einsetzen eines Einzugsbolzens 12 in die Spanneinrichtung 1 oder Herausnehmen des Einzugsbolzens 12 Druckluft in die Aufnahme 11 eingeblasen werden, um auf diese Weise die Aufnahme 11 mit dem Kugelkäfig und den Einzugsbolzen 12 von Spänen oder sonstigen Verunreinigungen insbesondere im Bereich der Paßflächen und des Spannmechanismus sauber zu halten. Hierdurch können in zuverlässiger Weise verschmutzungsbedingte Beeinträchtigungen der Systemgenauigkeit vermieden werden.

## Patentansprüche

1. Spanneinrichtung (1) zur Fixierung eines Einzugsbolzens (12) an einem Maschinentisch, einer Grundplatte oder dergleichen, mit einem Kolben (6), der axial verstellbar in einer Ausnehmung des Maschinentisches angeordnet und hydraulisch betätigbar ist, und einem am Maschinentisch fixierten Deckel (9), um die Ausnehmung im Maschinentisch zu verschließen, wobei der Kolben (6) und/oder der Deckel (9) eine Aufnahme (11) bilden, in die ein Einzugsbolzen (12) durch den Deckel (9) eingesetzt werden kann und in der er mittels eines durch Verstellung des Kolbens (6) betätigbaren Spannmechanismus fixierbar ist, **dadurch gekennzeichnet, daß** in die Maschinentischausnehmung eine einteilig ausgebildete Buchse (3) eingesetzt ist, in welcher der Kolben (6) unter Bildung eines Druckraums (5) verschiebbar gehalten ist, wobei der Deckel (9) einerseits an der Buchse und andererseits am Maschinentisch befestigt ist und die Befestigung am Maschinentisch durch mehrere, die Buchse (3) axial durchsetzende Schrauben (27) erfolgt, und wobei die Buchse (3) und/oder der Deckel (9) Zentrierflächen (28) zur Positionierung am Maschinentisch oder dergleichen aufweisen.

2. Spanneinrichtung nach Anspruch 1, **dadurch gekennzeichnet, daß** der Deckel (9) einen in die Buchse (3) eingreifenden Zentrieransatz (9a) aufweist.

3. Spanneinrichtung nach Anspruch 1 oder 2, **dadurch gekennzeichnet, daß** zwischen Deckel (9) und Buchse (3) ein Dichtungselement angeordnet ist.

4. Spanneinrichtung nach einem der vorherigen Ansprüche, **dadurch gekennzeichnet, daß** der Außenrand des Deckels (9) einen Zentrierrand bildet, der mit einer am Maschinentisch (2) vorgesehenen Vertiefung (2b) eine Passung bildet.

5. Spanneinrichtung nach einem der vorherigen Ansprüche, **dadurch gekennzeichnet, daß** der Deckel (9) mit der Buchse (3) verschraubt ist.

6. Spanneinrichtung nach einem der vorherigen Ansprüche, **dadurch gekennzeichnet, daß** der Deckel (9) zumindest teilweise in den Maschinentisch versenkbar ist.

7. Spanneinrichtung nach Anspruch 6, **dadurch gekennzeichnet, daß** der Deckel (9) vollständig in den Maschinentisch versenkbar ist, so daß er bündig mit der Tischoberfläche abschließt.

8. Spanneinrichtung nach einem der vorherigen Ansprüche, **dadurch gekennzeichnet, daß** an der Mantelfläche der Buchse (3) eine Zentrierfläche (28) ausgebildet ist, die mit einer entsprechenden Zentrierfläche der Ausnehmung am Maschinentisch oder dergleichen eine Passung bildet.

## Claims

1. Clamping device (1) for fixing an insertible bolt (12) on a machine table, a base plate or the like, comprising a piston (6) which is arranged to be axially adjustable in a cutout of the machine table and hydraulically operated, and a cover (9) fixed onto the machine table for closing the cutout in the machine table, and the piston (6) and/or the cover (9) form a receptacle (11) into which an insertible bolt (12) can be inserted through the cover (9) and where it can be fixed by means of a clamping mechanism which is operated by way of adjustment of the piston (6), **characterised in that** into the machine table cutout is inserted a one-piece bush (3) wherein the piston (6) is displaceably held whilst establishing a pressure area (5), and the cover (9) is fixed on the one side on the bush and on the other side on the machine table, and fixing to the machine table is by way of a plurality of bolts (27) which axially pass through the bush (3), and the bush (3) and/or the cover (9) comprise centring surfaces (28) for positioning at the machine table or the like.

2. Clamping device according to Claim 1, **characterised in that** the cover (9) comprises a centring piece (9a) which engages the bush (3).

3. Clamping device according to Claim 1 or 2, **characterised in that** between the cover (9) and the bush (3) is arranged a sealing element.

4. Clamping device according to one of the above claims, **characterised in that** the outside edge of the cover (9) forms a centring edge which mates with a recess (2b) provided on the machine table (2).

5. Clamping device according to one of the above claims, **characterised in that** the cover (9) is bolted to the bush (3).

6. Clamping device according to one of the above claims, **characterised in that** the cover (9) is at least partially inserted into the machine table.

7. Clamping device according to Claim 6, **characterised in that** the cover (9) is fully lowered into the machine table so that it lies flush with the table surface.

8. Clamping device according to one of the above claims, **characterised in that** on the casing surface of the bush (3) is a centring surface (28) which mates with a respective centring surface of the recess on the machine table or the like.

## Revendications

1. Dispositif de serrage (1) pour fixer un tirant d'ancrage (12) sur une table de machine-outil, une plaque de montage ou analogue, comprenant un piston (6) logé dans un évidement de la table de machine-outil de manière à être mobile axialement et pouvant être actionné par un système hydraulique, et un couvercle (9) fixé sur la table de machine-outil et destiné à fermer l'évidement dans la table de machine-outil, sachant que le piston (6) et/ou le couvercle (9) forment un logement (11) dans lequel un tirant d'ancrage (12) peut être logé en passant à travers le couvercle (9) et dans lequel il peut être immobilisé au moyen d'un mécanisme de serrage pouvant être actionné en déplaçant le piston (6), **caractérisé en ce qu'**une douille (3) d'un seul tenant est logée dans l'évidement de la table de machine-outil, dans laquelle le piston (6) est maintenu de manière déplaçable en formant une chambre de pression (5), sachant que le couvercle (9) est fixé d'une part à la douille et d'autre part à la table de machine-outil et que la fixation sur la table de machine-outil est réalisée par plusieurs vis (27) traversant axialement la douille (3), et sachant que la douille (3) et/ou le couvercle (9) présentent des surfaces de centrage (28) pour les positionner sur la table de machine-outil ou analogue.

2. Dispositif de serrage selon la revendication 1, **caractérisé en ce que** le couvercle (9) présente une saillie de centrage (9a) venant se mettre en prise avec la douille (3).

3. Dispositif de serrage selon la revendication 1 ou 2, **caractérisé en ce qu'**entre le couvercle (9) et la douille (3) est placée une garniture d'étanchéité.

4. Dispositif de serrage selon l'une des revendications précédentes, **caractérisé en ce que** le bord extérieur du couvercle (9) constitue un bord de centrage qui forme un ajustement avec un renfoncement (2b) prévu dans la table (2) de machine-outil.

5. Dispositif de serrage selon l'une des revendications précédentes, **caractérisé en ce que** le couvercle (9) est fixé à la douille (3) par vissage.

6. Dispositif de serrage selon l'une des revendications précédentes, **caractérisé en ce que** le couvercle (9) peut au moins en partie être noyé dans la table de machine-outil.

7. Dispositif de serrage selon la revendication 6, **caractérisé en ce que** le couvercle (9) peut être entièrement noyé dans la table de machine-outil, de manière à être en affleurement avec la surface de la table.

8. Dispositif de serrage selon l'une des revendications précédentes, **caractérisé en ce qu'**une surface de centrage (28) est formée sur la surface latérale de la douille (3), qui forme un ajustement avec une surface de centrage complémentaire de l'évidement dans la table de machine-outil ou analogue.
